# FASCICULE DE BREVET EUROPEEN

(11) **EP 4 195 306 B1**
(45) Date de publication et mention de la délivrance du brevet: **16.10.2024**
(21) Numéro de dépôt: 22210010.9
(22) Date de dépôt: 28.11.2022
(51) Int. Cl.: H01M 4/04, H01M 4/13, H01M 4/62, H01M 10/052, H01M 10/0525, H01M 4/02, H01M 4/38, H01M 4/485, H01M 4/505, H01M 4/525, H01M 4/58

(54) **ÉLECTRODES POSITIVES SPÉCIFIQUES COMPRENANT UN SEL SPÉCIFIQUE POUR ACCUMULATEUR DU TYPE MÉTAL ALCALIN-ION**
SPEZIFISCHE POSITIVELEKTRODEN MIT EINEM SPEZIFISCHEN SALZ FÜR EINE ALKALIMETALL-IONEN-BATTERIE
SPECIFIC POSITIVE ELECTRODES COMPRISING A SPECIFIC SALT FOR AN ALKALI METAL-ION BATTERY

(30) Priorité: 09.12.2021 FR 2113210
(43) Date de publication de la demande: 14.06.2023
(73) Titulaire: Commissariat à l'énergie atomique et aux énergies alternatives, 75015 Paris (FR)
(72) Inventeur: GUTEL, Thibaut, 38054 GRENOBLE CEDEX 09 (FR); TOMASI, Daniel, 38054 GRENOBLE CEDEX 09 (FR)
(74) Mandataire: Brevalex

(56) Documents cités:
- WO-A1-2011/157958
- WO-A1-2017/067994
- WO-A1-2017/067996
- WO-A1-99/28984
- US-A1- 2017 365 882
- D. SHANMUKARAJ ET AL: "Sacrificial salts: Compensating the initial charge irreversibility in lithium batteries", ELECTROCHEMISTRY COMMUNICATIONS, vol. 12, no. 10, 18 July 2010 (2010-07-18), pages 1344 - 1347, XP027423660, ISSN: 1388-2481, [retrieved on 20101001], DOI: 10.1016/J.ELECOM.2010.07.016

## Description

### DOMAINE TECHNIQUE

La présente invention a trait à des électrodes positives spécifiques comprenant un sel spécifique pour accumulateur du type métal alcalin-ion, des accumulateurs du type métal alcalin-ion comprenant ce type d'électrodes, un procédé de traitement de tels accumulateurs et à l'utilisation dudit sel spécifique en tant que sel sacrificiel lors de la première charge de ces accumulateurs.

Les accumulateurs métal alcalin-ion ont pour vocation d'être de plus en plus utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH). Ils peuvent également servir à fournir l'alimentation en énergie nécessaire aux nouvelles microapplications, telles que les cartes à puce, les capteurs ou autres systèmes électromécaniques.

Du point de vue de leur fonctionnement, ces accumulateurs fonctionnent selon le principe d'insertion-désinsertion de l'ion alcalin concerné (tel que du lithium, pour les accumulateurs lithium-ion, du sodium pour les accumulateurs sodium-ion ou du potassium pour les accumulateurs potassium-ion).

Lors de la décharge de l'accumulateur, le métal alcalin désinséré de l'électrode négative sous forme ionique migre à travers l'électrolyte conducteur ionique et vient s'intercaler dans le réseau cristallin du matériau actif de l'électrode positive. Le passage de chaque ion alcalin dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :
- l'électrode négative va insérer le métal alcalin sous forme ionique dans le réseau du matériau d'insertion la constituant ;
- l'électrode positive va libérer le métal alcalin sous forme ionique, lequel va s'intercaler dans le matériau d'insertion de l'électrode négative.

Lors la première charge de l'accumulateur, quand le matériau actif de l'électrode négative est porté à un potentiel d'insertion du métal alcalin, une partie de celui-ci va réagir avec l'électrolyte à la surface des grains de matériau actif de l'électrode négative pour former une couche de passivation à sa surface. La formation de cette couche de passivation consomme une quantité d'ions alcalins non négligeable, ce qui se matérialise par une perte irréversible de capacité de l'accumulateur (cette perte étant qualifiée de capacité irréversible), du fait que les ions alcalins ayant réagi ne sont plus disponibles pour les cycles ultérieurs de charge/décha rge.

Il convient donc de minimiser, au maximum, cette perte lors de la première charge, afin que la densité d'énergie de l'accumulateur soit la plus élevée possible.

Pour ce faire, il a été proposé, dans l'art antérieur, pour les accumulateurs de type lithium-ion deux types de techniques pour pallier l'inconvénient susmentionné :
- des techniques de prélithiation de l'électrode négative ; ou
- des techniques de surlithiation de l'électrode positive.

Concernant les techniques de prélithiation de l'électrode négative, on peut citer :
- les techniques dites « *in situ* » consistant à déposer sur l'électrode négative du lithium métallique (c'est-à-dire au degré d'oxydation « 0 ») soit sous forme d'une feuille métallique (comme décrit dans WO 1997031401) ou soit sous forme d'une poudre de lithium métallique stabilisée par une couche protectrice (comme décrit dans Electrochemistry Communications 13 (2011) 664-667) mélangée avec l'encre comprenant les ingrédients de l'électrode négative (à savoir, le matériau actif, les conducteurs électroniques et un liant organique), l'insertion de lithium se faisant, indépendamment de l'alternative retenue, de manière spontanée par un phénomène de corrosion ;
- les techniques dites « *ex situ* » consistant à prélithier électrochimiquement l'électrode négative, en plaçant celle-ci dans un montage comportant un bain électrolytique et une contre-électrode comprenant du lithium, ces techniques permettent de contrôler la quantité de lithium introduite dans l'électrode négative mais présentent toutefois l'inconvénient de nécessiter la mise en place d'un montage expérimental lourd.

En variante, il a été également proposé, dans l'art antérieur, des techniques de surlithiation de l'électrode positive, notamment, en ajoutant dans la composition comprenant les ingrédients constitutifs de l'électrode positive, un sel sacrificiel qui, lors de la première charge, va se décomposer et fournir la quantité nécessaire de Li pour former la couche de passivation à la surface de l'électrode négative.

Dans ces techniques, il est à noter que le sel sacrificiel doit pouvoir se décomposer à un potentiel situé dans la fenêtre de potentiel que balaie l'électrode positive lors de la première charge du cycle de formation

Aussi, lorsque la première charge du cycle de formation a lieu, lorsque l'on prend pour exemple les accumulateurs au lithium deux réactions électrochimiques simultanées génèrent des ions Li⁺, qui sont la désinsertion de lithium de l'électrode positive et la décomposition du sel sacrificiel.

Ces techniques sont notamment décrites dans WO99/28984, qui décrit deux familles de sels de lithium utilisables comme sels sacrificiels des oxocarbones/dicarboxylates de lithium et des azotures/oxyhydrazides de lithium, ces sels pouvant être décomposés par oxydation à haut potentiel (entre 3V et 5V vs Li⁺/Li) en générant du COz et du N₂ d'une part et des ions lithium disponibles pour le système d'autre part.

WO2017/067994 A1, WO 2017/067996 A1, WO 2011/157958 A1 et D. Shanmukaraj et al. dans "Electrochemistry Communications", vol. 12, no. 10, 18 juillet 2010 (2010-07-18), pages 1344-1347, divulguent tous des procédés de préparation d'accumulateurs de type sodium-ion ou lithium-ion, comprenant une électrode positive et une électrode négative disposées de part et d'autre d'un électrolyte, ces procédés comprenant une étape de formation d'une couche de passivation à la surface de l'électrode négative avec les ions sodium ou lithium issus de la décomposition d'un sel spécifique du métal correspondant par application d'une première charge. Les sels spécifiques utilisés dans ces documents sont des sels organiques de métaux alcalins, tels que des oxocarbones ou dicarboxylates, ou encore des azotures ou oxyhydrazides.

US 2017/365882 A1 décrit une batterie lithium-ion comprenant une électrode positive, une électrode négative, un séparateur polymérique nanoporeux ou mésoporeux disposé entre les deux électrodes, et un ou plusieurs agents chélatants destinés à complexer les ions de métaux de transition éventuellement libérés au cours du fonctionnement de la batterie, ces agents complexants pouvant être présents dans la solution d'électrolyte, au sein du séparateur ou à la surface de l'une des électrodes de la batterie. Parmi les agents chélatants utilisés, des sels d'acides polycarboxyliques, comme par exemple le nitrilotriacétate de lithium (Li₃NTA) ou de sodium (Na₃NTA), sont mentionnés.

Au vu de ce qui existe déjà, les auteurs se sont donc proposé de mettre au point de nouvelles électrodes positives comprenant un sel spécifique qui puisse permettre la formation efficace d'une couche de passivation à la surface de l'électrode négative lors du cycle de formation ou qui puisse servir de réserve d'ions au cours de la vie de l'accumulateur, dans lequel l'électrode sera incorporée. Par ailleurs, le sel spécifique mis en oeuvre se décomposera à des potentiels similaires à ceux déjà utilisés dans l'art antérieur mais avec des capacités théoriques et pratiques supérieures tout en générant moins de sous-produits gazeux.

### EXPOSE DE L'INVENTION

Ainsi, l'invention a trait à une électrode positive pour accumulateur métal alcalin-ion comprenant au moins un liant organique et au moins un sel de métal alcalin répondant à la formule (I) suivante : 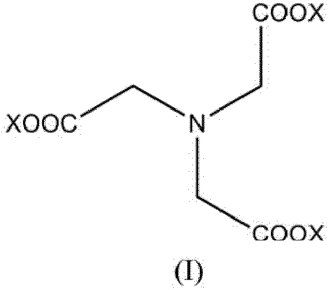 dans laquelle les X représentent un élément alcalin.

Par électrode positive, on précise, classiquement, dans ce qui précède et ce qui suit, qu'il s'agit de l'électrode qui fait office de cathode, quand le générateur débite du courant (c'est-à-dire lorsqu'il est en processus de décharge) et qui fait office d'anode lorsque le générateur est en processus de charge.

Les auteurs de l'invention ont pu mettre en évidence que ce type de sel présent dans une électrode positive pour accumulateur métal alcalin-ion, une fois celle-ci incorporée dans un accumulateur et l'accumulateur soumis à la première charge du cycle de formation, pouvait faire office de sel sacrificiel avec des capacités théoriques et pratiques supérieures (donc libère plus de lithium par gramme) tout en générant moins de sous-produits gazeux dont l'élimination s'avère être délicate lors dudit cycle de formation par rapport à des sels structurellement proches comme ceux illustrés aux exemples comparatifs 1 et 2 ci-dessous. Par ailleurs, ce sel de métal alcalin peut être servir comme réserve d'ions au cours de la vie de l'accumulateur ou pour faire travailler l'électrode sur un domaine de capacités particulier.

Comme mentionné ci-dessus, le sel de métal alcalin répond à la formule (I) suivante : 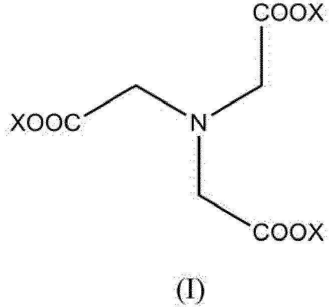 dans laquelle les X représentent un élément alcalin.

Les X peuvent représenter, en particulier, l'élément lithium (notamment lorsque l'électrode est destinée à un accumulateur lithium-ion), l'élément sodium (notamment lorsque l'électrode est destinée à un accumulateur sodium-ion) ou l'élément potassium (notamment lorsque l'électrode est destinée à un accumulateur potassium-ion).

L'électrode comprend également au moins un liant organique, de préférence, un liant polymérique, tel que :
*les (co)polymères fluorés, tels qu'un polytétrafluoroéthylène (connu sous l'abréviation PTFE), un polyfluorure de vinylidène (connu sous l'abréviation PVDF), un poly(fluorure de vinylidène-co-hexafluoropropène) (connu sous l'abréviation PVDF-HFP) ;
*les polymères élastomères, tels qu'un copolymère styrènebutadiène (connu sous l'abréviation SBR), un copolymère éthylène-propylène-monomère diénique (connu sous l'abréviation EPDM) ;
*les polymères de la famille des alcools polyvinyliques ;
*les polymères cellulosiques, tel qu'une carboxyméthylcellulose (connue sous l'abréviation CMC) ;
*les polymères de la famille des poly(méth)acrylates, tels qu'un polyméthacrylate de méthyle (connu sous l'abréviation PMMA) ;
*les polymères de la famille des polyacides acryliques (connus sous l'abréviation PAA) ; et
*les mélanges de ceux-ci.

En outre, l'électrode peut comprendre au moins un additif conducteur électronique, c'est-à-dire un additif susceptible de conférer à l'électrode, dans laquelle il est incorporé, une conductivité électronique, cet additif pouvant être, par exemple, choisi parmi des matériaux carbonés tels que le noir de carbone, les nanotubes de carbone, les fibres de carbone (en particulier, les fibres de carbone obtenues en phase vapeur connues sous l'abréviation VGCF), du graphite sous forme de poudre, les fibres de graphite, du graphène et les mélanges de ceux-ci.

En outre, en sus des autres ingrédients déjà mentionnés ci-dessus, l'électrode peut comprendre, en outre, avantageusement au moins un matériau actif d'électrode, à savoir un matériau apte à intercaler ou désintercaler des ions alcalins tel que des ions lithium, lorsque l'accumulateur est un accumulateur lithium-ion ; des ions sodium, lorsque l'accumulateur est un accumulateur sodium-ion ; des ions potassium, lorsque l'accumulateur est un accumulateur potassium-ion.

Lorsque l'électrode positive est destinée à un accumulateur au lithium, le matériau actif d'électrode peut être choisi parmi :
- des chalcogénures métalliques de formule LiMQ₂, dans laquelle M est au moins un élément métallique choisi parmi les éléments métalliques, tels que Co, Ni, Fe, Mn, Cr, V, Al et Q est un chalcogène, tel que O ou S, les chalcogénures métalliques préférés étant ceux de formule LiMO₂, avec M étant tel défini ci-dessus, tel que, de manière préférée, LiCoO₂, LiNiO₂, LiNiₓCo₁₋ₓO₂ (avec 0<x<1), un matériau à base de lithium-nickel-manganèse-cobalt LiNiₓMn_{y}Co_{z}O₂ avec x+y+z=1 (connu également sous l'abréviation NMC), tel que LiNi₀,₃₃Mn₀,₃₃Co₀,₃₃O₂, ou un matériau à base de lithium-nickel-cobalt-aluminium LiNiₓCo_{y}Al_{z}O₂ avec x+y+z = 1 (connu également sous l'abréviation NCA), tel que LiNi₀,₈CO₀,₁₅Al₀,₀₅O₂ ;
- des chalcogénures de structure spinelle, tels que LiMn₂O₄ ;
- des matériaux lithiés ou partiellement lithiés de formule M₁M₂(JO₄)_{f}E_{1-f}, dans laquelle M₁ est du lithium, qui est peut être partiellement substitué par un autre élément alcalin à hauteur d'un taux de substitution de moins de 20%, M₂ est un élément métallique de transition de degré d'oxydation +2 choisi parmi Fe, Mn, Ni et les combinaisons de ceux-ci, qui peut être partiellement substitué par un ou plusieurs autres éléments métalliques additionnels de degré(s) d'oxydation(s) entre +1 et +5 à hauteur d'un taux de substitution de moins de 35%, JO₄ est un oxyanion dans lequel J est choisi parmi P, S, V, Si, Nb, Mo et les combinaisons de ceux-ci, E est un anion fluorure, hydroxyde ou chlorure, f est la fraction molaire de l'oxyanion JO₄ et est compris, généralement, entre 0,75 et 1 (incluant 0,75 et 1).

Plus spécifiquement, les matériaux lithiés ou partiellement lithiés peuvent être à base de phosphore (ce qui signifie, en d'autres termes, que l'oxyanion répond à la formule PO₄) et peuvent présenter une structure du type olivine ordonnée ou modifiée.

Les matériaux lithiés ou partiellement lithiés peuvent répondre à la formule spécifique Li₃₋ₓM'_{y}M''_{2-y}(JO₄)₃, dans laquelle 0≤x≤3, 0≤y≤2, M' et M" représentent des éléments métalliques identiques ou différents, l'un au moins des M' et M" étant un élément métallique de transition, JO₄ est, de préférence, PO₄, qui peut être partiellement substitué par un autre oxyanion avec J étant choisi parmi S, V, Si, Nb, Mo et les combinaisons de ceux-ci.

Les matériaux lithiés ou partiellement lithiés peuvent répondre à la formule Li(FeₓMn₁-ₓ)PO₄, dans laquelle 0≤x≤1 et, de préférence, x est égal à 1 (ce qui signifie, en d'autres termes, que le matériau correspondant est LiFePO₄).

Les électrodes positives peuvent être constituées exclusivement d'au moins un sel de métal alcalin de formule (I) telle que définie ci-dessus, d'au moins un liant organique, tel qu'un liant polymérique et éventuellement d'au moins un additif conducteur électronique tel que défini ci-dessus. De telles électrodes pourront être utilisées dans un dispositif du type accumulateur en vue de préalcaliniser une électrode négative, cette électrode négative une fois l'opération de préalcalinisation réalisée pouvant être ensuite extraite dudit dispositif et incorporée dans un accumulateur métal alcalin-ion.

Les électrodes positives peuvent être également constituées exclusivement d'au moins un sel de métal alcalin de formule (I) telle que définie ci-dessus, d'au moins un liant organique, tel qu'un liant polymérique, d'au moins un matériau actif tel que défini ci-dessus et éventuellement d'au moins un additif conducteur électronique tel que défini ci-dessus, auquel cas elles pourront faire office d'électrode permanente dans un accumulateur et servir à la formation de la couche de passivation lors de la première charge appliquée à l'accumulateur.

Selon un premier mode de réalisation, les électrodes de l'invention peuvent se présenter ainsi, du point de leur constitution, sous forme d'une pièce, par exemple, parallélépipédique ou sous forme d'une pastille, comprenant un matériau composite comprenant une matrice polymérique constituée d'un ou plusieurs liants polymériques (par exemple, un ou des liants polymériques spécifiques tel(s) que défini(s) ci-dessus) et comprenant, comme charges, au moins un sel de métal alcalin de formule (I) telle que définie ci-dessus et, éventuellement, au moins un matériau actif, tel que défini ci-dessus et éventuellement un ou plusieurs additifs conducteurs électroniques, tels que ceux définis ci-dessus. Une électrode spécifique conforme à ce premier mode de réalisation peut être une électrode constituée d'un matériau composite comprenant une matrice polymérique constituée de PVDF et comprenant, comme charges, un sel de métal alcalin de formule (I) telle que définie ci-dessus, un matériau actif tel que défini ci-dessus et un additif conducteur électronique, tel que du noir de carbone (par exemple, du SuperP^{®}).

Selon un deuxième mode de réalisation, lorsque les électrodes comprennent, en sus des autres ingrédients, au moins un matériau actif d'électrode, les électrodes de l'invention peuvent se présenter sous forme d'une première partie comprenant un matériau composite comprenant une matrice polymérique constituée d'un ou plusieurs liants polymériques (par exemple, un ou des liants polymériques spécifiques tel(s) que défini(s) ci-dessus) et comprenant, comme charges, au moins un matériau actif et, éventuellement, un ou plusieurs additifs conducteurs électroniques, tels que ceux définis ci-dessus et une deuxième partie, sous forme d'une couche déposée à la surface de la première partie, ladite couche comprenant une matrice polymérique constituée d'un ou plusieurs liants polymériques (par exemple, un ou des liants polymériques spécifiques tel(s) que défini(s) ci-dessus) et comprenant, comme charge, au moins un sel de métal alcalin de formule (I) telle que définie ci-dessus. Avec un tel mode de réalisation, à l'issue de la première charge du cycle de formation, la couche comprenant le sel de métal alcalin se décompose, en tout ou partie, pour donner les ions alcalins nécessaires à la formation de la couche de passivation sur l'électrode négative, sans que cela ne désorganise la structure interne de l'électrode positive, celle-ci, à l'issue de la première charge, présentant une organisation structurale similaire à celle d'une électrode classique, notamment sans qu'il n'y ait apparition de volume mort et de perte de matériau actif. D'autre part, contrairement aux modes de réalisation de l'art, où le sel sacrificiel est introduit directement dans la composition précurseur de l'électrode positive et où il est nécessaire d'inclure une quantité de sel supérieure à celle nécessaire à la formation de la couche de passivation du fait de l'impossibilité de maîtriser le placement des grains de sel dans la structure de l'électrode, le procédé de l'invention donne la possibilité d'utiliser, du fait de la localisation du sel alcalin juste à la surface de l'électrode positive, uniquement la quantité suffisante à la formation de la couche de passivation sur l'électrode négative. Dans ce cas, il n'y a donc pas de sel excédentaire dans l'électrode positive après formation de la couche de passivation et donc de matière inutile dans celle-ci.

Les électrodes positives sont avantageusement en contact avec un collecteur de courant, par exemple, un feuillard en aluminium.

Les électrodes positives de l'invention sont destinées à être incorporées dans une cellule d'accumulateur métal alcalin-ion, laquelle est également un des objets de l'invention et comprend ainsi une électrode positive telle que définie ci-dessus, une électrode négative et un électrolyte disposé entre l'électrode positive et l'électrode négative.

On précise que, par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Classiquement, l'électrode négative comprend, comme matériau actif d'électrode, un matériau apte à insérer, de manière réversible, des ions alcalins (tel que des ions lithium, lorsque l'accumulateur est un accumulateur lithium-ion ; des ions sodium, lorsque l'accumulateur est un accumulateur sodium-ion ; des ions potassium, lorsque l'accumulateur est un accumulateur potassium-ion.

Lorsque l'électrode négative est destinée à un accumulateur au lithium, le matériau actif d'électrode négative peut être choisi parmi :
- des matériaux carbonés, tels que du carbone graphitique apte à intercaler du lithium pouvant exister, typiquement, sous forme d'une poudre, de paillettes, de fibres ou de sphères (par exemple, des microbilles de mésocarbone) ;
- des composés à base de silicium, tel qu'un carbure de silicium SiC ou un oxyde de silicium SiOₓ;
- du lithium métallique ;
- des alliages de lithium, tels que ceux décrits dans US 6203944 et/ou WO 00/03444 ;
- des oxydes de titane lithiés, tel qu'un oxyde de formule Li₍₄₋ₓ₎MₓTi₅O₁₂ ou Li₄M_{y}Ti_{(5-y)}O₁₂ dans laquelle x et y vont de 0 à 0,2, M représente un élément choisi parmi Na, K, Mg, Nb, Al, Ni, Co, Zr, Cr, Mn, Fe, Cu, Zn, Si et Mo, un exemple spécifique étant Li₄Ti₅O₁₂, ces oxydes étant des matériaux d'insertion du lithium présentant un faible niveau d'expansion physique après avoir inséré du lithium ;
- des oxydes de titane non lithiés, tel que TiO₂;
- des oxydes de formule M_{y}Ti(_{5-y})O₁₂ dans laquelle y va de 0 à 0,2 et M est un élément choisi parmi Na, K, Mg, Nb, Al, Ni, Co, Zr, Cr, Mn, Fe, Cu, Zn, Si et Mo ;
- des alliages lithium-germanium, tels que ceux comprenant des phases cristallines de formule Li_{4,4}Ge ; ou
- d'un mélange de ceux-ci, tel qu'un mélange comprenant du graphite et un composé à base de silicium.

En outre, au même titre que pour l'électrode positive, l'électrode négative peut comprendre un liant organique, tel qu'un liant polymérique, comme du polyfluorure de vinylidène (PVDF), un mélange carboxyméthylcellulose avec un latex du type styrène et/ou butadiène ainsi qu'éventuellement un ou plusieurs additifs conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) polymérique(s) au sein de laquelle sont dispersées des charges constituées par le matériau actif (se présentant, par exemple, sous forme particulaire) et éventuellement le ou les adjuvants conducteurs de l'électricité, ledit matériau composite pouvant être déposé sur un collecteur de courant.

L'électrolyte disposé entre l'électrode positive et l'électrode négative peut être un électrolyte liquide conducteur d'ions alcalins, qui peut comprendre (voire est constitué de) au moins un solvant organique et au moins un sel métallique et éventuellement un composé de la famille des composés vinyliques.

Le ou les solvants organiques peuvent être des solvants carbonates et, plus spécifiquement :
- des solvants carbonates cycliques, tel que le carbonate d'éthylène (symbolisé par l'abréviation EC), le carbone de propylène (symbolisé par l'abréviation PC), le carbonate de butylène, le carbonate de vinylène, le carbonate de fluoroéthylène, le carbonate de fluoropropylène et les mélanges de ceux-ci ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC) et les mélanges de ceux-ci.

Le ou les solvants organiques peuvent être également des solvants esters (tels que le propionate d'éthyle, le propionate de n-propyle), des solvants nitriles (tels que l'acétonitrile) ou des solvants éthers (tels que le diméthyléther, le 1,2-diméthoxyéthane).

Le ou les sels métalliques peuvent être choisis parmi les sels de formules suivantes : Mel, Me(PF₆)ₙ, Me(BF₄)n, Me(ClO₄)ₙ, Me(bis(oxalato)borate)ₙ (pouvant être désigné par l'abréviation Me(BOB)ₙ), MeCF₃SO₃, Me[N(FSO₂)₂]ₙ, Me[N(CF₃SO₂)₂]ₙ, Me[N(C₂F₅SO₂)₂]ₙ, Me[N(CF₃SO₂)(R_{F}SO₂)]ₙ, dans laquelle R_{F} est un groupe -C₂F₅, -C₄F₉ ou -CF₃OCF₂CF₃, Me(AsF₆)ₙ, Me[C(CF₃SO₂)₃]ₙ, Me₂Sₙ, Me(C₆F₃N₄) (C₆F₃N₄ correspondant à du 4,5-dicyano-2-(trifluorométhyl)imidazole et, lorsque Me est Li, le sel correspond à du 4,5-dicyano-2-(trifluorométhyl)imidazole de lithium, ce sel étant connus sous l'abréviation LiTDI), dans lesquelles Me est un élément métallique et, de préférence, un élément de transition métallique, un élément alcalin ou un élément alcalino-terreux et, de préférence encore, Me est Li (notamment, lorsque l'accumulateur de l'invention est un accumulateur lithium-ion ou lithium-air), Na (notamment, lorsque l'accumulateur est un accumulateur sodium-ion), K (notamment, lorsque l'accumulateur est un accumulateur potassium-ion).

Lorsque Me est Li, le sel est, de préférence, LiPF₆.

La concentration du sel métallique dans l'électrolyte liquide est, avantageusement, d'au moins 0,01 M, de préférence d'au moins 0,025 M et, de préférence encore, d'au moins 0,05 M et, avantageusement, d'au plus 5 M, de préférence, d'au plus 2 M et, de préférence encore, d'au plus, 1M.

Un électrolyte liquide pouvant être utilisé dans les accumulateurs de l'invention, notamment lorsqu'il s'agit d'un accumulateur lithium-ion, est un électrolyte comprenant un mélange de solvants carbonates (par exemple, un mélange de solvants carbonates cycliques, tel qu'un mélange de carbonate d'éthylène et de carbonate de propylène et présent, par exemple, en volume identique), un sel de lithium, par exemple, LiPF₆ (par exemple, 1M).

L'électrolyte liquide peut être compris au sein d'un séparateur disposé entre l'électrode positive et l'électrode négative, ledit séparateur pouvant consister en une membrane polymérique poreuse, tel qu'une membrane en polyoléfine(s).

Enfin, l'invention a trait à un procédé de traitement de la cellule d'accumulateur telle que définie ci-dessus comprenant une étape de formation d'une couche de passivation à la surface de l'électrode négative avec les ions X issus de la décomposition du sel de métal alcalin de formule (I) tel que défini ci-dessus parapplication d'une première charge à la cellule susmentionnée. Il est bien entendu que les ions X sont des ions alcalins issus directement des X du sel de métal alcalin de formule (I).

En d'autres termes, la première charge est appliquée dans des conditions de potentiel nécessaires pour la décomposition du sel de métal alcalin présent au niveau de l'électrode positive, cette décomposition se traduisant par une libération d'ions alcalins, qui vont contribuer à la formation de la couche de passivation à la surface de l'électrode négative. Du fait que le sel alcalin fournisse les ions alcalins nécessaires à la formation de la couche de passivation, on peut ainsi qualifier ce sel de « sel sacrificiel ».

Aussi, lorsque l'électrode positive comprend, en outre, au moins un matériau actif d'électrode, les ions alcalins nécessaires pour la formation de la couche de passivation ne sont pas issus dudit matériau actif de l'électrode positive. Les ions alcalins du matériau actif de l'électrode positive ne sont donc pas perdus pour la formation de cette couche lors de la première charge et donc la perte de capacité de l'accumulateur s'en trouve amoindrie voire nulle.

La cellule conforme à l'invention est soumise, conformément au procédé de l'invention, à une étape de première charge dans des conditions de potentiel nécessaires pour la décomposition du sel de métal alcalin compris dans l'électrode positive, la décomposition se matérialisant par la libération des ions alcalins, lesquels vont participer à la formation de la couche de passivation.

Aussi, d'un point de vue pratique, il s'entend que le sel de métal alcalin doit pouvoir se décomposer dans une fenêtre de potentiels que peut supporter l'électrode positive lors de la première charge.

Ainsi, lors de la mise en oeuvre de la première charge, outre le fait que la cellule d'accumulateur se charge, il s'ensuit également une réaction de décomposition du sel de métal alcalin. Lors de cette réaction, le sel de métal alcalin produit des ions alcalins qui passent dans l'électrolyte et réagissent avec celui-ci pour former la couche de passivation au niveau des particules de matériau actif de l'électrode négative. En plus de la libération d'ions alcalins, la décomposition du sel entraîne la production d'une faible quantité de composés gazeux. Ceux-ci peuvent être solubles dans l'électrolyte et peuvent, si besoin est, être éliminés lors d'une étape de dégazage.

Enfin, l'invention a trait à l'utilisation d'un sel de formule (I) suivante : 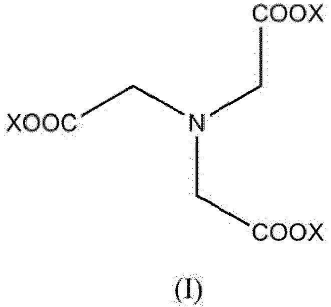 dans laquelle les X représentent un élément alcalin en tant que sel sacrificiel pour la formation d'une couche de passivation à la surface d'une électrode négative d'un accumulateur métal alcalin-ion, qui comprend, en outre, une électrode positive comprenant ledit sel et un électrolyte disposé entre l'électrode positive et l'électrode négative.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

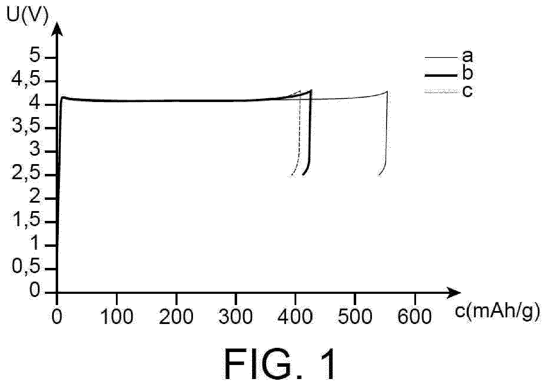

[Fig. 1] est un graphique illustrant l'évolution de la tension U (en V vs Li⁺/Li) en fonction de la capacité spécifique C (en mAh/g), la courbe a) étant représentative de la pile obtenue avec l'électrode composite comprenant le sel de l'exemple 1, la courbe b) étant représentative de la pile obtenue avec l'électrode composite comprenant le sel de l'exemple comparatif 1 et la courbe c) étant représentative de la pile obtenue avec l'électrode composite comprenant le sel de l'exemple comparatif 2.

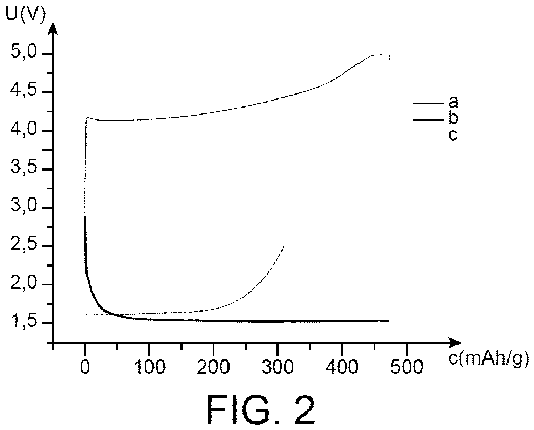

[Fig. 2] est un graphique illustrant, pour une cellule obtenue avec l'électrode comprenant le sel de l'exemple 1, l'évolution de la tension U (en V vs Li⁺/Li) en fonction de la capacité spécifique C (en mAh/g) avec la courbe a) étant représentative de l'électrode comprenant le sel de l'exemple 1 lors de la première charge, la courbe b) étant représentative de la contre-électrode à base de Li4Ti5O₁₂ lors de la première charge et la courbe c) étant représentative de la contre-électrode à base de Li₄Ti₅O₁₂ lors de la deuxième décharge.

### EXPOSÉ DÉTAILLÉ DE MODES DE RÉALISATION PARTICULIERS

### EXEMPLE 1

Cet exemple illustre la préparation d'un sel de lithium utilisable pour la préparation d'une électrode positive conforme à l'invention, ce sel de lithium répondant à la formule suivante :

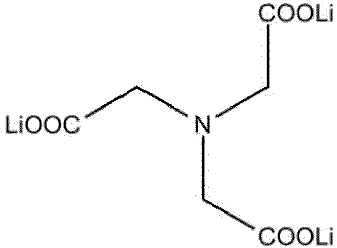

L'acide nitriloacétique (1g) est dispersé dans 50 mL d'eau ultrapure avant l'ajout de l'hydroxyde de lithium (3 équivalents, 0,65 g). Après 24 heures d'agitation à température ambiante, l'eau est évaporée à l'aide d'un évaporateur rotatif. Le composé obtenu de façon quantitative est ensuite caractérisé par diffraction des rayons X (DRX) et spectroscopie infrarouge. La pureté et la teneur en eau des structures hydratées sont déterminées par analyse élémentaire et thermogravimétrique. Le composé est ensuite désolvaté sous vide à 250°C. Ce composé présente une capacité théorique de 384 mAh/g et une capacité mesurée de 550 mAh/g et un volume théorique de gaz libéré de 2,5 éq mol.

### EXEMPLE COMPARATIF 1

Cet exemple illustre la préparation d'un sel de lithium utilisable pour la préparation d'une électrode positive non conforme à l'invention, ce sel de lithium répondant à la formule suivante :

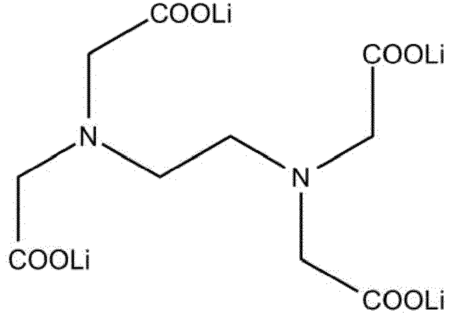

L'acide éthylène diamine tétraacétique (1g) est dispersé dans 50 mL d'eau ultrapure avant l'ajout de l'hydroxyde de lithium (4 équivalents, 0,57 g). Après 24 heures d'agitation à température ambiante, l'eau est évaporée à l'aide d'un évaporateur rotatif. Le composé obtenu de façon quantitative est ensuite caractérisé par diffraction des rayons X (DRX) et spectroscopie infrarouge. La pureté et la teneur en eau des structures hydratées sont déterminées par analyse élémentaire et thermogravimétrique. Le composé est ensuite désolvaté sous vide à 250°C. Ce composé présente une capacité théorique de 339 mAh/g et une capacité mesurée de 424 mAh/g et un volume théorique de gaz libéré de 3 éq mol.

### EXEMPLE COMPARATIF 2

Cet exemple illustre la préparation d'un sel de lithium utilisable pour la préparation d'une électrode positive non conforme à l'invention, ce sel de lithium répondant à la formule suivante :

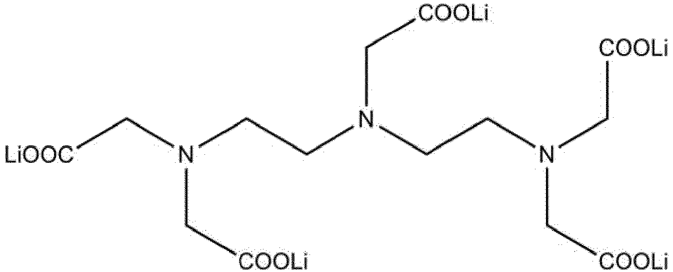

L'acide diéthylène diamine pentaacétique (1g) est dispersé dans 50 mL d'eau ultrapure avant l'ajout de l'hydroxyde de lithium (5 équivalents, 0,53 g). Après 24 heures d'agitation à température ambiante, l'eau est évaporée à l'aide d'un évaporateur rotatif. Le composé obtenu de façon quantitative est ensuite caractérisé par diffraction des rayons X (DRX) et spectroscopie infrarouge. La pureté et la teneur en eau des structures hydratées sont déterminées par analyse élémentaire et thermogravimétrique. Le composé est ensuite désolvaté sous vide à 250°C. Ce composé présente une capacité théorique de 316 mAh/g et une capacité mesurée de 407 mAh/g et un volume théorique de gaz libéré de 3,3 éq mol.

### EXEMPLE 2

Cet exemple illustre la préparation d'électrodes test comprenant les sels préparés aux exemples précédents, ces électrodes étant destinées juste à analyser la décomposition électrochimique desdits sels dans un contexte de pile bouton face à une électrode en lithium métallique ou dans une configuration de « *Pouch Cell* » face à une électrode comprenant du Li4Ti₅O₁₂. Dans cette optique, elles ne comprennent pas de matériau actif d'électrode en plus des sels, contrairement à ce que cela devrait être pour des électrodes destinées à fonctionner dans un réel contexte de pile.

Trois types de ces électrodes sont préparés :
- une électrode comprenant le sel de lithium de l'exemple 1 ;
- une électrode comprenant le sel de lithium de l'exemple comparatif 1 ; et
- une électrode comprenant le sel de lithium de l'exemple comparatif 2.

Le protocole de préparation de ces électrodes est le suivant.

Le sel approprié est mélangé avec du noir de carbone SuperP^{®} dans un mortier puis l'ensemble est dispersé au sein d'une solution comprenant du PVDF dans de la NMP (N-méthylpyrrolidinone), afin d'obtenir une encre, dont l'extrait sec est composé de 60% massique de sel, 30% massique de noirde carbone et 10% massique de PVDF. Cette encre est enduite sur un feuillard en aluminium présentant une épaisseur de 100 µm humide et, après séchage à 55°C, le dépôt obtenu est découpé en un disque de 14 mm de diamètre, calandré à une pression de 10 tonnes et séché sous vide.

### EXEMPLE 3

Dans cet exemple, les électrodes préparées à l'exemple 2 sont assemblées, chacune, face à une contre-électrode en lithium métallique avec un séparateur en polyoléfines imbibé d'un électrolyte organique (solution de LiPF₆ 1M dans un mélange de carbonate d'éthylène/carbonate de propylène/carbonate de diméthylcarbonate dans des proportions 1/1/3 en volume) au sein d'une pile de format pile bouton. Les 3 piles ainsi formées sont soumises à un cycle de charge/décharge à un régime de C/20.

Les résultats de ce cycle sont reportés sur la figure 1, qui illustre l'évolution de la tension U (en V vs Li⁺/Li) en fonction de la capacité spécifique C (en mAh/g), la courbe a) étant représentative de la pile obtenue avec l'électrode composite comprenant le sel de l'exemple 1, la courbe b) étant représentative de la pile obtenue avec l'électrode composite comprenant le sel de l'exemple comparatif 1 et la courbe c) étant représentative de la pile obtenue avec l'électrode composite comprenant le sel de l'exemple comparatif 2.

Il ressort de cette figure, qu'avec la pile obtenue avec l'électrode composite comprenant le sel de l'exemple 1, la décomposition a lieu à environ 4,1 V vs Li⁺/Li, qu'elle est totalement irréversible (pas de phénomène de réduction) et qu'elle correspond à 550 mAh/g d'équivalent d'ions lithium libéré, ce qui est une amélioration substantielle par rapport aux piles obtenues avec les sels des exemples comparatifs 1 et 2.

### EXEMPLE 4

Dans cet exemple, une électrode conforme à l'exemple 2 (l'électrode comprenant le sel de l'exemple 1) sont assemblées face à une contre-électrode à base de Li₄Ti₅O₁₂ (LTO) avec un séparateur en polyoléfines imbibé d'un électrolyte organique (solution de LiPF₆ 1M dans un mélange de carbonate d'éthylène/carbonate de propylène/carbonate de diméthylcarbonate dans des proportions 1/1/3 en volume) au sein d'une cellule monoface de type « *Pouch Cell* » comportant une troisième électrode en lithium métallique servant d'électrode de référence.

La cellule obtenue est soumise à un cycle de charge/décharge réalisée à un régime de C/20 en contrôlant le potentiel des électrodes par rapport à l'électrode de référence. Les résultats sont reportés, sur la figure 2, qui illustre l'évolution de la tension U (en V vs Li⁺/Li) en fonction de la capacité spécifique C (en mAh/g) avec la courbe a) étant représentative de l'électrode comprenant le sel de l'exemple 1 lors de la première charge, la courbe b) étant représentative de la contre-électrode à base de Li₄Ti₅O₁₂lors de la première charge et la courbe c) étant représentative de la contre-électrode à base de Li₄Ti₅O₁₂ lors de la première décharge.

Cette expérience permet de démontrer que le lithium libéré par la décomposition du sel est bien disponible et inséré dans la contre-électrode de LTO et qu'il est possible de le désinsérer lors de la décharge.

## Revendications

1. Electrode positive pour accumulateur métal alcalin-ion comprenant au moins un liant organique et au moins un sel de métal alcalin répondant à la formule (I) suivante : 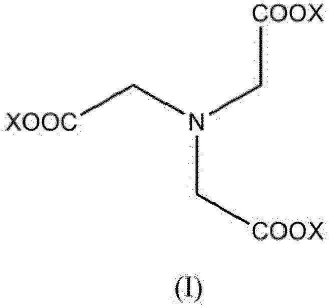 dans laquelle les X représentent un élément alcalin.

2. Electrode positive selon la revendication 1, dans laquelle, pour la formule (I), les X représentent l'élément lithium, l'élément sodium ou l'élément potassium.

3. Electrode positive selon la revendication 1 ou 2, dans laquelle, pour la formule (I), les X représentent l'élément lithium.

4. Electrode positive selon l'une quelconque des revendications précédentes, dans laquelle le liant organique est un liant polymérique.

5. Electrode positive selon l'une quelconque des revendications précédentes, comprenant, en outre, au moins un matériau actif d'électrode.

6. Electrode positive selon la revendication 5, dans laquelle, lorsque l'électrode positive est destinée à un accumulateur au lithium, le matériau actif d'électrode est choisi parmi :
- des chalcogénures métalliques de formule LiMQ₂, dans laquelle M est au moins un élément métallique choisi parmi les éléments métalliques, tels que Co, Ni, Fe, Mn, Cr, V, Al et Q est un chalcogène;
- des chalcogénures de structure spinelle, tels que LiMn₂O₄ ;
- des matériaux lithiés ou partiellement lithiés de formule M₁M₂(JO₄)tE_{1-f}, dans laquelle M₁ est du lithium, éventuellement partiellement substitué par un autre élément alcalin à hauteur d'un taux de substitution de moins de 20%, M₂ est un élément métallique de transition de degré d'oxydation +2 choisi parmi Fe, Mn, Ni et les combinaisons de ceux-ci, éventuellement partiellement substitué par un ou plusieurs autres éléments métalliques additionnels de degré(s) d'oxydation(s) entre +1 et +5 à hauteur d'un taux de substitution de moins de 35%, JO₄ est un oxyanion dans lequel J est choisi parmi P, S, V, Si, Nb, Mo et les combinaisons de ceux-ci, E est un anion fluorure, hydroxyde ou chlorure, f est la fraction molaire de l'oxyanion JO₄ et est compris, généralement, entre 0,75 et 1 (incluant 0,75 et 1).

7. Electrode positive selon l'une quelconque des revendications précédentes, comprenant, en outre, au moins un additif conducteur électronique.

8. Electrode positive selon l'une quelconque des revendications précédentes, ladite électrode se présentant sous forme d'une pièce comprenant un matériau composite comprenant une matrice polymérique constituée d'un ou plusieurs liants polymériques et comprenant, comme charges, au moins un sel de métal alcalin de formule (I) telle que définie à la revendication 1 et, éventuellement, au moins un matériau actif d'électrode et, éventuellement, un ou plusieurs additifs conducteurs électroniques.

9. Electrode positive selon l'une quelconque des revendications 1 à 7, ladite électrode se présentant sous forme d'une première partie comprenant un matériau composite comprenant une matrice polymérique constituée d'un ou plusieurs liants polymériques et comprenant, comme charges, au moins un matériau actif et, éventuellement, un ou plusieurs additifs conducteurs électroniques et comprenant une deuxième partie, sous forme d'une couche déposée à la surface de la première partie, ladite couche comprenant une matrice polymérique constituée d'un ou plusieurs liants polymériques et comprenant, comme charge, au moins un sel de métal alcalin de formule (I) telle que définie à la revendication 1.

10. Cellule d'accumulateur métal alcalin-ion comprenant une électrode positive telle que définie selon l'une quelconque des revendications 1 à 9, une électrode négative et un électrolyte disposé entre l'électrode positive et l'électrode négative.

11. Cellule d'accumulateur métal alcalin-ion selon la revendication 10, dans laquelle l'électrode négative comprend, comme matériau actif d'électrode, un matériau actif choisi parmi :
- des matériaux carbonés, tels que du carbone graphitique apte à intercaler du lithium ;
- des composés à base de silicium, tel qu'un carbure de silicium SiC ou un oxyde de silicium SiOₓ;
- du lithium métallique ;
- des alliages de lithium ;
- des oxydes de titane lithiés, tel qu'un oxyde de formule Li₍₄₋ₓ₎MₓTi₅O₁₂ ou Li₄M_{y}Ti(_{5-y})O₁₂ dans laquelle x et y vont de 0 à 0,2, M représente un élément choisi parmi Na, K, Mg, Nb, Al, Ni, Co, Zr, Cr, Mn, Fe, Cu, Zn, Si et Mo ;
- des oxydes de titane non lithiés, tel que TiO₂;
- des oxydes de formule M_{y}Ti(_{5-y})O₁₂ dans laquelle y va de 0 à 0,2 et M est un élément choisi parmi Na, K, Mg, Nb, Al, Ni, Co, Zr, Cr, Mn, Fe, Cu, Zn, Si et Mo ;
- des alliages lithium-germanium ; ou
- d'un mélange de ceux-ci.

12. Cellule d'accumulateur métal alcalin-ion selon la revendication 10 ou 11, dans laquelle l'électrolyte est un électrolyte liquide conducteur d'ions alcalins comprenant au moins un solvant organique et au moins un sel métallique.

13. Procédé de traitement de la cellule d'accumulateur telle que définie selon l'une quelconque des revendications 10 à 12, comprenant une étape de formation d'une couche de passivation à la surface de l'électrode négative avec les ions X issus de la décomposition du sel de métal alcalin de formule (I) tel que défini à la revendication 1 par application d'une première charge à la cellule susmentionnée.

14. Utilisation d'un sel de formule (I) suivante : 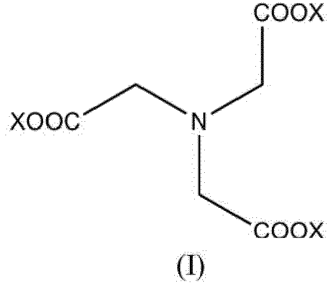 dans laquelle les X représentent un élément alcalin en tant que sel sacrificiel pour la formation d'une couche de passivation à la surface d'une électrode négative d'un accumulateur métal alcalin-ion, qui comprend, en outre, une électrode positive comprenant ledit sel et un électrolyte disposé entre l'électrode positive et l'électrode négative.

## Patentansprüche

1. Positive Elektrode für einen Alkali-Ionen-Metall-Akkumulator, mindestens ein organisches Bindemittel umfassend und mindestens ein Alkalimetallsalz, entsprechend der folgenden Formel (I): 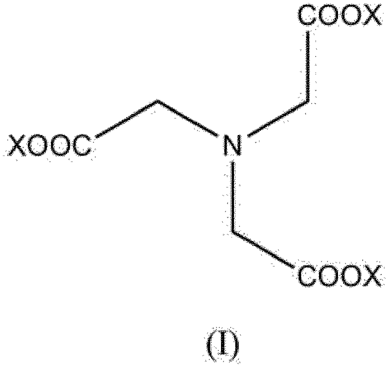 wobei die X ein alkalisches Element darstellen.

2. Positive Elektrode nach Anspruch 1, wobei für die Formel (I) die X das Element Lithium, das Element Natrium oder das Element Kalium darstellen.

3. Positive Elektrode nach Anspruch 1 oder 2, wobei für die Formel (I) die X das Element Lithium darstellen.

4. Positive Elektrode nach einem der vorhergehenden Ansprüche, wobei das organische Bindemittel ein polymeres Bindemittel ist.

5. Positive Elektrode nach einem der vorhergehenden Ansprüche, ferner mindestens ein aktives Elektrodenmaterial umfassend.

6. Positive Elektrode nach Anspruch 5, wobei, wenn die positive Elektrode für einen Lithium-Akkumulator bestimmt ist, das aktive Elektrodenmaterial ausgewählt wird aus:
- Metallchalkogeniden der Formel LiMQ₂, wobei M mindestens ein metallisches Element ist, das aus metallischen Elementen ausgewählt ist, wie Co, Ni, Fe, Mn, Cr, V, Al und Q ein Chalkogen ist;
- Chalkogeniden mit Spinellstruktur, wie LiMn₂O₄;
- lithiierten oder teilweise lithiierten Materialien der Formel M₁M₂(JO₄)fE_{1-f}, wobei M₁ Lithium ist, gegebenenfalls teilweise durch ein anderes alkalisches Element mit einer Substitutionsrate von weniger als 20 % substituiert, M₂ ein metallisches Übergangselement mit Oxidationsstufe +2 ist, das ausgewählt ist aus Fe, Mn, Ni und deren Kombinationen, gegebenenfalls teilweise substituiert durch ein oder mehrere andere zusätzliche metallische Elemente mit Oxidationsstufe(n) zwischen +1 und +5 mit einer Substitutionsrate von weniger als 35 %, JO₄ ein Oxyanion ist, wobei J ausgewählt ist aus P, S, V, Si, Nb, Mo und deren Kombinationen, E ein Fluorid-, Hydroxid- oder Chlorid-Anion ist, f der Stoffmengenanteil des Oxyanions JO₄ ist und im Allgemeinen zwischen 0,75 und 1 liegt (einschließlich 0,75 und 1).

7. Positive Elektrode nach einem der vorhergehenden Ansprüche, ferner mindestens ein elektronisch leitfähiges Additiv umfassend.

8. Positive Elektrode nach einem der vorhergehenden Ansprüche, wobei die Elektrode als Stück vorliegt, das einen Verbundwerkstoff umfasst, der eine Polymermatrix umfasst, die aus einem oder mehreren polymeren Bindemitteln besteht, und als Füllstoffe mindestens ein Alkalimetallsalz der Formel (I) umfasst, wie in Anspruch 1 definiert ist, und gegebenenfalls mindestens ein aktives Elektrodenmaterial und gegebenenfalls ein oder mehrere elektronisch leitfähige Additive.

9. Positive Elektrode nach einem der Ansprüche 1 bis 7, wobei die Elektrode in Form eines ersten Teils vorliegt, der einen Verbundwerkstoff umfasst, der eine Polymermatrix umfasst, die aus einem oder mehreren polymeren Bindemitteln besteht, und als Füllstoffe mindestens ein aktives Material und gegebenenfalls ein oder mehrere elektronisch leitfähige Additive umfasst, und einen zweiten Teil in Form einer Schicht umfasst, die auf der Oberfläche des ersten Teils abgeschieden ist, wobei die Schicht eine Polymermatrix umfasst, die aus einem oder mehreren polymeren Bindemitteln besteht, und als Füllstoff mindestens ein Alkalimetallsalz der Formel (I) umfasst, wie in Anspruch 1 definiert ist.

10. Alkali-Ionen-Metall-Akkumulatorzelle, eine positive Elektrode umfassend, wie in einem der Ansprüche 1 bis 9 definiert ist, eine negative Elektrode und einen Elektrolyten, der zwischen der positiven Elektrode und der negativen Elektrode angeordnet ist.

11. Alkali-Ionen-Metall-Akkumulatorzelle nach Anspruch 10, wobei die negative Elektrode als aktives Elektrodenmaterial ein aktives Material umfasst, das ausgewählt ist aus:
- kohlenstoffhaltigen Materialien, wie graphitischer Kohlenstoff, der zum Interkalieren von Lithium geeignet ist;
- Verbindungen auf Siliziumbasis, wie Siliziumkarbid SiC oder Siliziumoxid SiOx;
- metallischem Lithium;
- Lithiumlegierungen;
- lithiierten Titanoxiden, wie ein Oxid der Formel Li(₄₋ₓ)MₓTi₅O₁₂ oder Li₄M_{y}Ti(_{5-y})O₁₂, wobei x und y von 0 bis 0,2 reichen, M ein Element darstellt, das ausgewählt ist aus Na, K, Mg, Nb, Al, Ni, Co, Zr, Cr, Mn, Fe, Cu, Zn, Si und Mo;
- nicht lithiierten Titanoxiden wie TiOz;
- Oxiden der Formel M_{y}Ti(_{5-y})O₁₂, wobei y von 0 bis 0,2 reicht, und M ein Element ist, das ausgewählt ist aus, Na, K, Mg, Nb, Al, Ni, Co, Zr, Cr, Mn, Fe, Cu, Zn, Si und Mo;
- Lithium-Germanium-Legierungen; oder
- einer Mischung davon.

12. Alkali-Ionen-Metall-Akkumulatorzelle nach Anspruch 10 oder 11, wobei der Elektrolyt ein flüssiger Elektrolyt ist, der Alkali-Ionen leitet, mindestens ein organisches Lösungsmittel und mindestens ein metallisches Salz umfassend.

13. Verfahren zur Behandlung der Akkumulatorzelle, wie in einem der Ansprüche 10 bis 12 definiert ist, einen Schritt der Bildung einer Passivierungsschicht auf der Oberfläche der negativen Elektrode mit den Ionen X umfassend, die aus der Zersetzung des Alkalimetallsalzes der Formel (I) hervorgegangen sind, wie in Anspruch 1 definiert ist, durch Aufbringen eines ersten Füllstoffes auf die vorgenannte Zelle.

14. Verwendung eines Salzes der folgenden Formel (I): 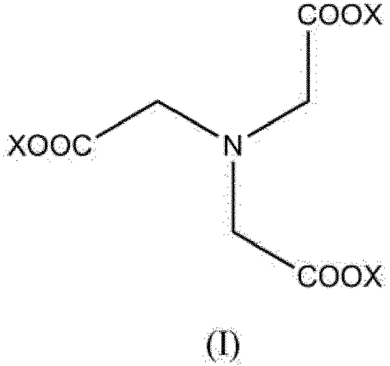 wobei die X ein alkalisches Element als Opfersalz für die Bildung einer Passivierungsschicht auf der Oberfläche einer negativen Elektrode eines Alkalilonen-Metall-Akkumulators darstellen, der ferner eine positive Elektrode umfasst, das Salz umfassend und einen Elektrolyten, der zwischen der positiven Elektrode und der negativen Elektrode angeordnet ist.

## Claims

1. Positive electrode for alkali metal-ion accumulator comprising at least one organic binder and at least one alkali metal salt of the following formula (I): 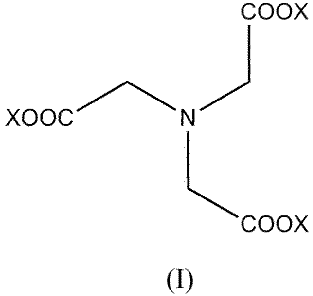 wherein the X represent an alkali element.

2. Positive electrode according to claim 1, wherein, for the formula (I), the X represent the lithium element, the sodium element or the potassium element.

3. Positive electrode according to claim 1 or 2, wherein, for the formula (I), the X represent the lithium element.

4. Positive electrode according to any one of the preceding claims, wherein the organic binder is a polymeric binder.

5. Positive electrode according to claim any one of the preceding claims, further comprising at least one electrode active material.

6. Positive electrode according to claim 5, wherein, when the positive electrode is intended for a lithium accumulator, the electrode active material is selected from:
- metal chalcogenides of formula LiMQ₂, wherein M is at least one metal element selected from the metal elements, such as Co, Ni, Fe, Mn, Cr, V, Al and Q is a chalcogen;
- chalcogenides of spinel structure, such as LiMn₂O₄;
- lithiated or partially lithiated materials of formula M₁M₂(JO₄)_{f}E_{1-f}, wherein M₁ is lithium, optionally partially substituted with another alkali element up to a substitution level of less than 20%, M₂ is a transition metal element of oxidation state +2 selected from Fe, Mn, Ni and combinations thereof, optionally partially substituted with one or more other additional metal elements of oxidation state(s) between +1 and +5 up to a substitution level of less than 35%, JO₄ is an oxyanion wherein J is selected from P, S, V, Si, Nb, Mo and combinations thereof, E is a fluoride, hydroxide or chloride anion, f is the mole fraction of the oxyanion JO₄ and is, generally, between 0.75 and 1 (including 0.75 and 1).

7. Positive electrode according to claim any one of the preceding claims, further comprising at least one electronically conductive additive.

8. Positive electrode according to claim any one of the preceding claims, said electrode being in the form of a part comprising a composite material comprising a polymer matrix consisting of one or more polymeric binders and comprising, as charges, at least one alkali metal salt of formula (I) such as defined in claim 1 and, optionally, at least one electrode active material and, optionally, one or more electronically conductive additives.

9. Positive electrode according to any one of claims 1 to 7, said electrode being in the form of a first part comprising a composite material comprising a polymer matrix consisting of one or more polymeric binders and comprising, as charges, at least one active material and, optionally, one or more electronically conductive additives and comprising a second part, in the form of a layer deposited on the surface of the first part, said layer comprising a polymer matrix consisting of one or more polymeric binders and comprising, as charges, at least one alkali metal salt of formula (I) such as defined in claim 1.

10. Alkali metal-ion accumulator cell comprising a positive electrode such as defined according to any one of claims 1 to 9, a negative electrode and an electrolyte disposed between the positive electrode and the negative electrode.

11. Alkali metal-ion accumulator cell according to claim 10, wherein the negative electrode comprises, as electrode active material, an active material selected from:
- carbon materials, such as graphitic carbon capable of intercalating lithium;
- silicon-based compounds, such as silicon carbide SiC or silicon oxide SiOₓ;
- metallic lithium;
- lithium alloys;
- lithiated titanium oxides, such as an oxide of formula Li₍₄₋ₓ₎MₓTi₅O₁₂ or Li₄M_{y}Ti_{(5-y)}O₁₂ wherein x and y range from 0 to 0.2, M represents an element selected from Na, K, Mg, Nb, Al, Ni, Co, Zr, Cr, Mn, Fe, Cu, Zn, Si and Mo;
- non-lithiated titanium oxides, such as TiO₂;
- oxides of formula M_{y}Ti_{(5-y)}O₁₂ wherein y ranges from 0 to 0.2 and M is an element selected from Na, K, Mg, Nb, Al, Ni, Co, Zr, Cr, Mn, Fe, Cu, Zn, Si and Mo;
- lithium-germanium alloys; or
- a mixture thereof.

12. Alkali metal-ion accumulator cell according to claim 10 or 11, wherein the electrolyte is a liquid electrolyte conducting alkali ions comprising at least one organic solvent and at least one metallic salt.

13. Method for treating the accumulator cell such as defined according to any one of claims 10 to 12, comprising a step of forming a passivation layer at the surface of the negative electrode with the X ions resulting from the decomposition of the alkali metal salt of formula (I) such as defined in claim 1 by applying a first charge to the abovementioned cell.

14. Use of a salt of following formula (I): 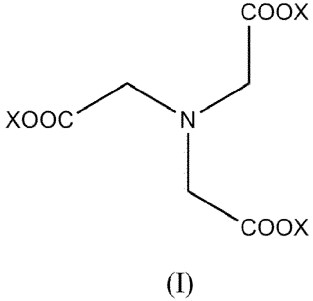 wherein the X represent an alkali element as sacrificial salt for the formation of a passivation layer at the surface of a negative electrode of an alkali metal-ion accumulator, which further comprises a positive electrode comprising said salt and an electrolyte disposed between the positive electrode and the negative electrode.
